# EUROPÄISCHE PATENTSCHRIFT

(11) **EP 0 916 299 B1**
(45) Veröffentlichungstag und Bekanntmachung des Hinweises auf die Patenterteilung: **04.10.2000**
(21) Anmeldenummer: 98120930.7
(22) Anmeldetag: 04.11.1998
(51) Int. Cl.: A47J 27/18

(54) **Schnellkochvorrichtung**
Fast cooking device
Dispositif de cuisson rapide

(30) Priorität: 04.11.1997 DE 19748582
(43) Veröffentlichungstag der Anmeldung: 19.05.1999
(73) Patentinhaber: Goedhart, Dieter, 53757 Sankt Augustin (DE)
(72) Erfinder: Goedhart, Dieter, 53757 Sankt Augustin (DE)
(74) Vertreter: Müller-Wolff, Thomas, Dipl.-Ing.

(56) Entgegenhaltungen:
- EP-A- 0 140 987
- EP-A- 0 296 549
- EP-B- 0 258 374
- WO-A-87/00741
- DE-A- 4 410 853
- DE-A- 19 500 973

## Beschreibung

Die Erfindung betrifft eine Schnellkochvorrichtung, bestehend aus einem Kochkessel 17 mit einer oberen und unteren Verschlußeinrichtung 26, 40, über die das Kochgut ein- bzw. ausgegeben werden kann und aus Frischwasserzufuhrleitungen 2 sowie Brauchwasserableitungen 3, wobei der vertikal angeordnete Kochkessel 17 von einer Vorheizkammer 13 umgeben ist, durch die das Frischwasser von unten nach oben durchgeleitet wird und wobei das vorgeheizte Frischwasser über einen oberhalb des Kochkessels angeordneten Verteilerkopf 4 sowohl in den Kochkessel 17 als auch zu einem Entlüftungs- und Entspannungsventil 16, 18 geführt wird.

Aus der DE 195 00 973 A1 ist eine Kochvorrichtung der eingangs genannten Art bekannt (vgl. Oberbegriff des Anspruchs 1), die aus einem Kochkessel zur Aufnahme von heißem Wasser sowie aus einer oberen und unteren Verschlußeinrichtung besteht, über die das Kochgut ein- bzw. ausgegeben werden kann. Der Kochkessel ist von einer Vorheizkammer umgeben, durch die das vorgeheizte Wasser über einen Verteilerkopf sowohl in den Kochkessel als auch zu einem Entlüftungs- und Entspannungsventil geführt wird. Das Brauchwasser wird über eine mit einem Auslaßventil verschließbare Abflußleitung entsorgt.

Ferner ist aus der EP 0 140 987 A1 eine Vorrichtung zum Kochen von Nahrungsmitteln, insbesondere Teigwaren, Trockengemüse oder dergleichen, mit einem Heißwassergenerator und einer der Kochkammer über einen Auslaß nachgeschalteten Trennkammer bekannt, wobei der Heißwassergenerator und die Trennkammer im oberen bzw. unteren Teil eines gemeinsamen, durch eine waagerechte Trennwand getrennten Gehäuses angeordnet sind.

Ist die Nahrungsmittelportion gar, so wird der sich in der Kochkammer bildende Wasserdampf in einen Wärmetauscher abgelassen und das gekochte Nahrungsmittel fällt in die Trennkammer herab. Von dort aus wird das beigemischte Wasser in einen separaten Wärmetauscher abgeführt.

Ebenso wird nach der EP 0 296 549 A1 ein separater Wärmetauscher für die Rückgewinnung der Heizenergie eingesetzt.

Aus der EP 0 258 374 B1 ist ferner ein Verfahren und eine Vorrichtung zum raschen Kochen von Teigwaren oder dergleichen bekannt, die aus einer Behälterkammer und einer getrennt davon angeordneten Rastkammer besteht, wobei oberhalb der Behälterkammer eine Dosiervorrichtung zur Einführung einer vorbestimmten Menge Teigwaren aufgesetzt ist.

Die Teigware wird zunächst in die Behälterkammer vertikal eingeführt und dann mit Kochwasser unter Druck gar gekocht. Anschließend wird die Teigware über ein Fördermittel in die Rastkammer zur Trocknung gegeben, wobei das Wasser mittels eines den Boden der Behälterkammer bildenden Difusors in die Behälterkammer eingeführt wird und dabei sich ein den Difusoren anliegendes Filterbrett ausbildet, um die Ausbildung von überhitztem Dampf zu vermeiden.

Auch diese bekannte Kocheinrichtung ist verhältnismäßig aufwendig und benötigt durch die nebeneinander angeordneten Behälterkammern und Rastkammer ein großes Bauvolumen. Durch die Verwendung mehrerer großvolumiger Behälter mit entsprechend dicker Behälterwandung ist ein 380 Volt-Anschluß erforderlich, um eine entsprechende Energiemenge bereitzustellen.

Aufgabe der vorliegenden Erfindung ist es daher, ein Schnellkochgerät der eingangs genannten Art derart weiterzuentwickeln, so daß eine bessere Energienutzung und eine Verringerung des Platzbedarfs ermöglicht wird.

Diese Aufgabe wird erfindungsgemäß durch die im Patentanspruch 1 angegebenen Merkmale gelöst.

Das neue Schnellkochgerät besteht aus einem von einer Vorheizkammer umschlossenen Einkammerkochkessel, der mit zwei integrierten, unabhängig voneinander arbeitenden Heizungssystemen und einer von außen aufgewickelten Druckentspannungsspule ausgerüstet ist, wobei eine Steuerung des Kochgerätes für eine vollständige Füllung des Kessels und der Zu- und Ableitungen sorgt.

In dem erfindungsgemäßen Einkammerkochkessel wird die Pasta unter Druck bei einer einstellbaren Temperatur von ca. 130 Grad C in frischem Wasser gekocht. Im Gegensatz zur Dampfbehandlung nach dem Stand der Technik sind erfindungsgemäß kurze Zubereitungszeiten erforderlich, um die Pastasorten mit hoher Qualität d. h., locker, leicht und bißfest, eben "al dente", zu verarbeiten.

Oberhalb des erfindungsgemäßen Gerätes befindet sich eine durch ein Schrittschaltwerk angetriebene Zuführungseinrichtung, die mit einem Magazin bestückt ist, das mit vorportionierter trockener Pasta gefüllt ist.

Anstelle der Zuführungseinrichtung kann das Gerät auch manuell über einen Einfülltrichter gefüllt werden z.B. bei speziellen Pastasorten. Durch Knopfdruck, Münzeinwurf oder Karteneinlesung wird das Kochprogramm in Gang gesetzt und eine Portion Pasta oder Spaghetti abgerufen, die durch eine Öffnungsvorrichtung in den darunter befindlichen Kochbehälter fällt.

Je nach Geschmacks- und Eßgewohnheit können die Betreiber der Anlage unterschiedliche Kochzeiten und Kochtemperaturen vorgeben. Nach Ablauf der eingestellten Kochzeit wird das Wasser automatisch abgelassen und die Pasta auf den unterhalb der erfindungsgemäßen Vorrichtung bereitgestellten Teller abgegeben. Da der Betrieb der erfindungsgemäßen Schnellkochvorrichtung durch eine vollelektronische Steuerung überwacht wird, kann eine gleichbleibende Qualität sichergestellt werden. Eine selbsttätige Reinigung des Kessels und der Leitungen sorgt in Abständen von ca. 30 Minuten für die Erfüllung aller Hygiene- und Qualitätsanforderungen, die an eine gewerblich eingesetzte Kücheneinrichtungen gestellt werden.

Im folgenden wird die Erfindung anhand eines Funktionsplanes erläutert. Es zeigen:

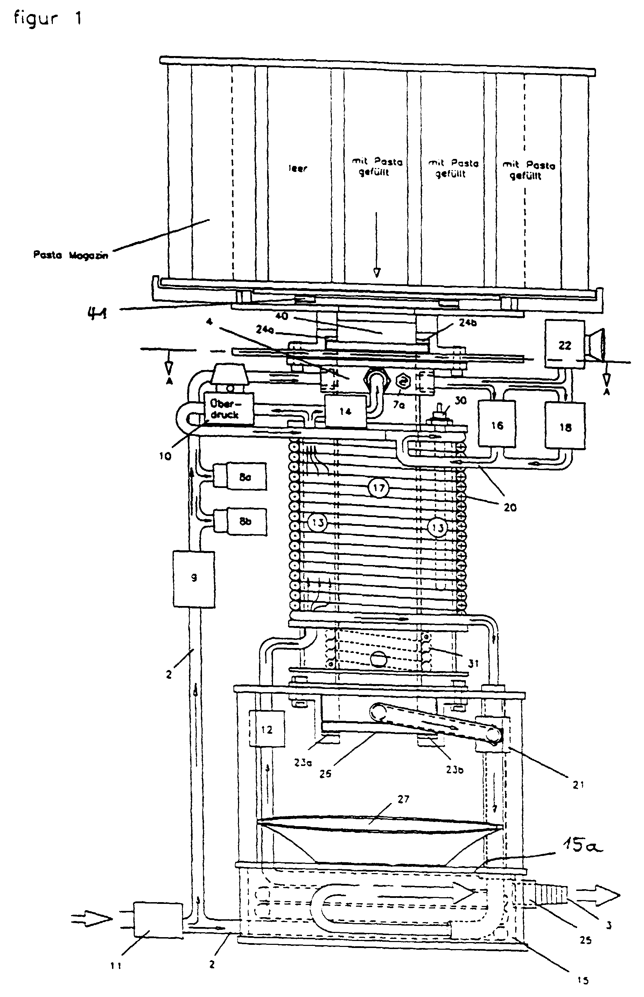

- Figur 1: Gesamtansicht der erfindungsgemäßen Vorrichtung

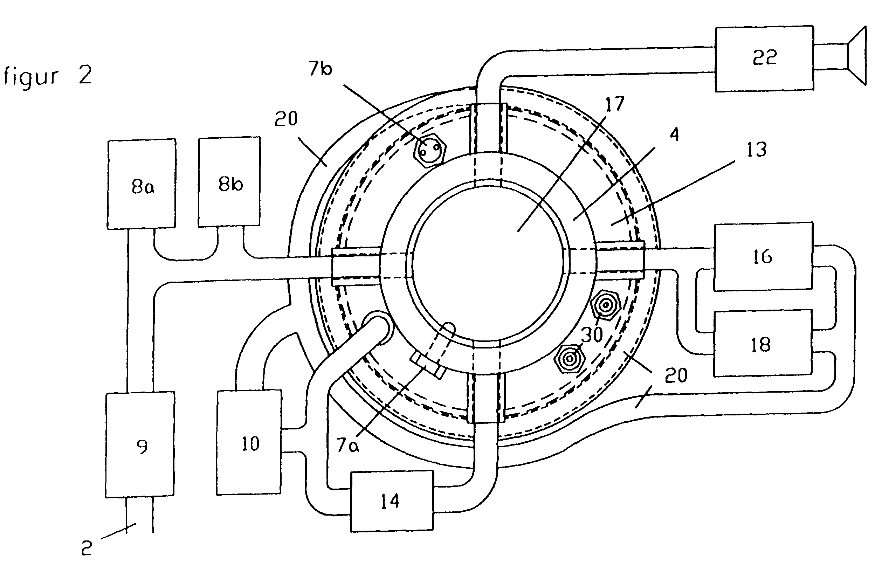

- Figur 2: Schnittansicht A-A der erfindungsgemäßen Vorrichtung in Höhe des Ventilanschlußkopfes

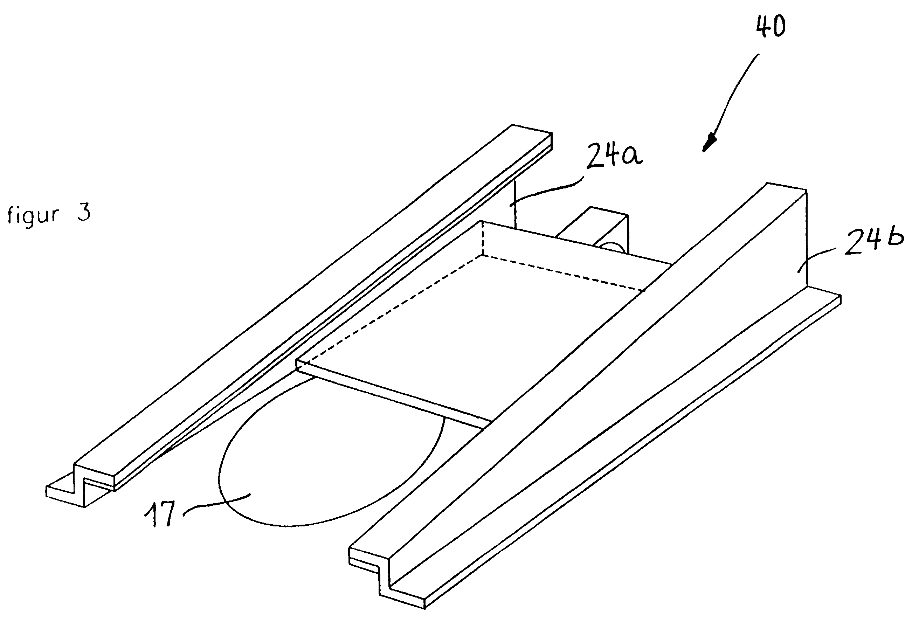

- Figur 3: Keilschieber-Ventil der erfindungsgemäßen Vorrichtung
- Figur 4: Schrittschaltwerk der Zuführungseinrichtung
- Figur 5.1: schematischer Funktionsablauf im Selbsttest
- Figur 5.2: schematischer Funktionsablauf im Kochbetrieb

### Kontrolle

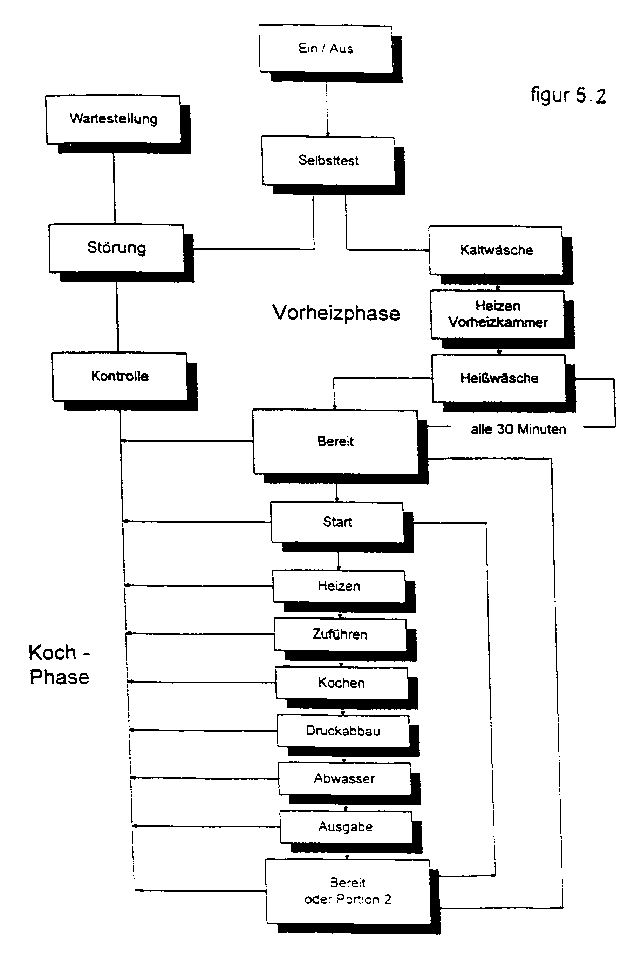

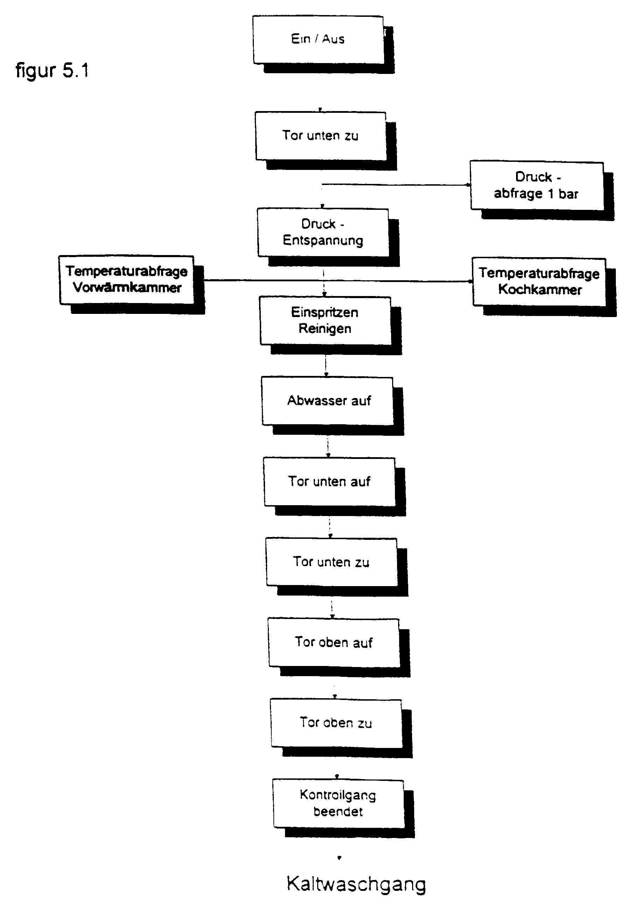

Nach dem Einschalten des Schnellkochgerätes durch einen Schlüsselschalter (Ein/Aus) startet das Gerät grundsätzlich einen internen Selbsttest zur Kontrolle aller Funktionen (siehe Figur 5) der Meßeinrichtungen, wie z. B. dem Temperaturfühler 7a für die Kochkammertemperatur und 7b für die Vorheizkammertemperatur 13, dem Druckschalter 8a, der bei einem Druck von über 1 bar in der Kochkammer 17 die beiden Keilschieber-Ventile 26, 40 des Kessels gegen ein unbeabsichtigtes Öffnen verriegelt und dabei das Entspannungs-Ventil 18 öffnet. Damit kann sich ein eventuell vorhandener Druck in der Kochkammer über die Druckentspannungs-spule 20 in den Wärmetauscher 15 entspannen.

Dann werden alle mechanischen Einrichtungen wie folgt betätigt: a) Keilschieber unten 26 öffnen, b) Keilschieber unten 26 schließen, c) Einspritzen über Reinigungsventil 9, d) Abwasser-ventil ein 21, e) Keilschieber oben 40 öffnen, f) Keilschieber oben 40 schließen. Falls eine Fehlfunktion auftritt, unterbricht die Maschine ihr Programm und schaltet sich in Wartestellung (siehe Figur 5, links), gleichzeitig wird eine spezifische Fehlermeldung im Display in der Frontplatte angezeigt, z. B. Wassermangel bei nicht geöffnetem Wasserhahn.

Dieser und die folgenden Vorgänge sind als Sicherheitsmaßnahmen zu betrachten:

Bei einer plötzlichen nicht beabsichtigten Unterbechung des Kochprozesses durch ein versehentliches Aus- und Einschalten der Maschine oder bei Stromausfall erfolgt eine elektronische Verriegelung, so daß sich kein Keilschieber 26, 40 des Kessels öffnen kann, bevor nicht der Druckausgleich in der Kochkammer 17 erfolgt ist und das heiße Medium aus der Kochkammer 17 über den Wärmetauscher 15 in die Abwasserleitung abgelassen worden ist.

Dann erst ist ein Neustart oder Programmstart möglich, der wiederum mit einem Selbstest ( Kontolle ) beginnt.

### Kaltwäsche

Nach dem bereits erfolgten Selbsttest beginnt die Kaltwäsche der Kochkammer. Über ein Rückschlagventil 11, einen Wärmetauscher 15 und ein Wasser-Eingangsventil 12 flutet das vorgewärmte Wasser durch die Vorheizkammer 13. Bei geöffnetem Verbindungsventil 14 strömt es in die Kochkammer 17, während die Luft über ein geöffnetes Entlüftungsventil 16 entweicht. Das Entlüftungsventil 16 schließt am Ende der Einlaufphase, und der Druck in der Kochkammer 17 steigt an bis auf einen Kesseldruck von ca. 3,5 bar. Bei diesem Druck schließt der als Niveau-Regler eingesetzte Druckschalter 8b das Wassereingangsventil 12. Damit ist die Wasserzuführung beendet und im gesamten Leitungssystem steht ausschließlich Wasser ohne Lufteinschluß.

Das Verbindungsventil 14 bleibt geöffnet und das Entlüftungsventil 16 bleibt geschlossen, um den vorhandenen Druck zur Simulation des Kochprozesses in der Kochkammer 17 zu erhalten. Nach Ablauf der einstellbaren Kochzeit öffnet sich das Entspannungs-ventil 18 bei gleichzeitig kurzer Einspritzung mit Kaltwasser durch das Einspritz- bzw. Reinigungs -Ventil 9 in die Kochkammer 17. Der Druck wird über das Entspannungsventil 18 und durch die um die Vorheizkammer 13 gewickelte Druckentspannungs-Spule 20 abgebaut, wobei sic das entspannte Wasser zum Wärmetauscher 15 bewegt. Bei weiterhin geöffnetem Entspannungsventil 18 öffnen sich das Abwasser-Ventil 21 und das Belüftungsventil 22. Das Wasser gelangt in den Wärmetauscher 15 und über einen Wärmetauscher-Überlauf 25 in die Abwasserleitung. Der untere Keilschieber 26 öffnet und schließt sich wieder und der Kaltwaschgang ist somit beendet.

### Aufheizen

Die Vorheizkammer 13 bzw. die Kochkammer 17, werden durch zwei voneinander getrennt steuerbare Heizungen 30, 31 auf die einstellbare Vorheiz- oder Kochtemperaturen aufgeheizt.

### Heißwäsche

Nach dem Erreichen der Aufheiztemperatur beginnt die Wäsche der Kochkammer. Das Waschen der Kochkammer 15 kann 1 bis 6 Waschzyklen umfassen. Wie zuvor beschrieben, drückt das durch den Wärmetauscher 15 vorgewärmte Wasser in die Vorheizkammer 13 und von dort das erhitzte Wasser oben aus der Vorheizkammer 13 über das geöffnete Verbindungsventil 14 bei noch geöffnetem Entlüftungsventil 16 in die Kochkammer 17.

Sobald das Entlüftungsventil 16 schließt, steigt der Druck in der Kochkammer 17 an, bis er den in einem Niveau-Regler eingesetzten und auf < 3,5 bar eingestellten Druckbereich des Druckschalters 8b erreicht. Dieser schaltet das Wassereingangsventil 12 ab und somit ist die Wasserzuführung bei einem Kesseldruck von ca. 3,5 bar beendet.

Das Verbindungsventil 14 bleibt geöffnet und das Entlüftungsventil 16 bleibt geschlossen, um den vorhandenen Druck zu erhalten und somit den Waschprozeß in der Kochkammer 17 zu intensivieren.

Nach Ablauf der eingestellten Waschzeit öffnet sich das Entspannungsventil 18 bei gleichzeitig kurzer Einspritzung mit Kaltwasser in die Kochkammer 17 durch das Einspritz- bzw. Reinigungsventil 9. Der Druck wird über das Entspannungsventil 18 und durch die, um die Vorwärmkammer 13 gewickelte Druckentspannungs-Spule 20 abgebaut. Bei weiterhin geöffnetem Entspannungsventil 18 öffnen sich das Abwasserventil 21 und bei einem abgesenkten Druck in der Kochkammer von unter 1 bar öffnet das Belüftungsventil 22 und verhindert einen Unterdruck in der Kochkammer, das Kochwasser gelangt in den Wärmetauscher 15 und über den Wärmetauscher-Überlauf 25 in das Abwasser. Der untere Keilschieber 26 öffnet und schließt sich wieder. Dann ist der Waschgang beendet.

Die Maschine meldet im Display auf der Frontseite

| | |
|---|---|
| Bereit | Uhrzeit |
| Portionen | 0 |

Nun kann entweder über Tastendruck, Münzeinwurf oder Karteneinlesung der Kochprozeß gestartet werden und bis zu 9 Portionen können geordert werden.

### Befüllen

Nach dem Starten des Kochprozesses öffnet sich der durch einen Linearantrieb betätigte obere Keilschieber 40. Die von einem Schrittschaltwerk 41 gesteuerte Zuführungseinrichtung dreht sich über die Kesselöffnung und die Pasta fällt in den Kessel, der obere Keilschieber schließt sich wieder.

Anstelle einer automatischen Zuführung kann das Gerät auch manuell über einen Einfülltrichter gefüllt werden, z.B. bei speziellen Pastasorten.

Über ein Rückschlagventil 11 und ein Wasser-Eingangsventil 12, gelangt das durch den Wärmetauscher 15 vorgewärmte Wasser von unten in die Vorheizkammer 13. Von dort wird das erhitzte Wasser oben aus der Vorheizkammer 13 über das geöffnete Verbindungsventil 14 bei noch geöffnetem Entlüftungsventil 16 in die Kochkammer 17 gedrückt.

Das Entlüftungsventil 16 schließt und der Druck in der Kochkammer 17 steigt an, bis er den vorgegebenen Schaltdruck von 3,5 bar erreicht. Bei diesem Druck schaltet der als Niveau-Regler eingesetzte Druckschalter 8b das Wassereingangsventil 12 ab und somit ist die Wasserzuführung bei einem Kesseldruck von ca. 3,5 bar beendet.

Das Verbindungsventil 14 bleibt geöffnet und das Entlüftungsventil 16 bleibt geschlossen und der vorhandene Druck wird gehalten. (Es erfolgt eine erneute Drucküberpfrüfung am Druckschalter 8b, ob der Druck in der Kochkammer konstant ist.)

### Kochen

Nun erfolgt der eigentliche Kochprozeß. Das bereits vorgeheizte Wasser wird in der Kochkammer 17 weiter aufgeheizt auf eine einstellbare Temperatur von etwa 135 Grad C bei einem ansteigenden Druck bis max. 5 bar. Während einer einstellbaren Kochzeit von ca. 2 Minuten wird der Druck von dem Sicherheits-Überdruckventil 10 überwacht, das bei einem weiteren Druckanstieg eine Druckminderung durch die Entspannungsspule 20 bewirkt.

Nach Ablauf der eingestellten Kochzeit schließt sich das Verbindungsventil 14. Es öffnet sich das Entspannungsventil 18 bei gleichzeitig kurzer Einspritzung mit Kaltwasser in die Kochkammer 17 durch das Einspritz- bzw. Reinigungsventil 9. Der Druck gelangt über das Entspannungsventil 18 und durch die, um die Vorwärmkammer 13 gewickelte Druckentspannungs-Spule 20 in den Wärmetauscher 15.

Daraus ergibt sich, daß die Einspritzung von Kaltwasser nur zum Druckausgleich und nicht zum Abschrecken der Pasta erfolgt. Das Abwasserventil 21 wird erst später geöffnet, wobei das heiße Kochwasser im Wärmetauscher 15 Energie an die Frischwasserzufuhrleitung 2 abgibt.

Es folgt eine elektronische Abfrage an die interne Steuerung, ob eine weitere Portion am Display oder am Münzeinwurf angefordert worden ist.

Bei geöffnetem Entspannungsventil 18 öffnet die Zeitsteuerung das Abwasserventil 21, wobei der Druck in der Kochkammer absinkt auf unter 1 bar. Dann öffnet das Belüftungsventil 22 und verhindert einen Unterdruck in der Kochkammer. Das Kochwasser gelangt in den Wärmetauscher 15 und über den Wärmetauscher-Überlauf 25 in das Abwasser.

Der untere Keilschieber 26 öffnet sich und die Pasta gleitet auf einen bereitgestellten Teller 27. Der untere Keilschieber schließt sich wieder und der Kochvorgang ist somit beendet. Es hat sich gezeigt, daß bei einer Kochzeit von 2 min unter einem Druck von 4 - 5 bar der Teig eine optimale Konsistenz hat, d.h. er ist weich ohne zu kleben. Deshalb kann die Pasta ohne Abschrecken direkt aus der Kochkammer auf den Teller gleiten.

Als weiterer Vorteil dieser Verfahrensweise ist die erhöhte Ausbringungstemperatur der Pasta zu nennen. Dadurch behält sie über eine lange Zeitdauer die erforderliche Wärme und Frische. Die Maschine meldet im Display - Bereit - oder leitet den nächsten Kochvorgang ein.

| | |
|---|---|
| Bereit | 12.30 |
| Portionen | 3 |

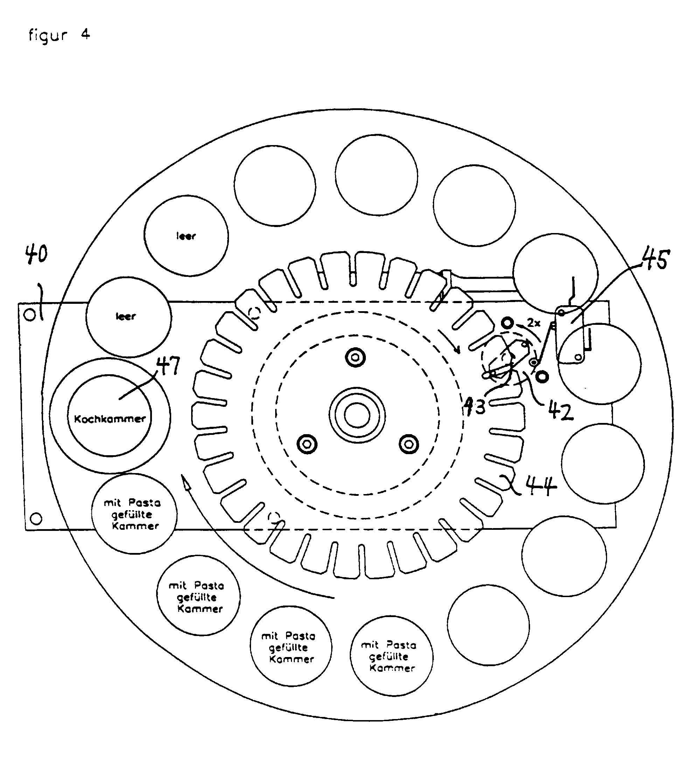

Falls weitere Portionen benötigt werden, tritt das Schrittschaltwerk gemäß Figur 4 in Aktion. Hierbei wird über einen Motor 42 und eine Schaltkulisse 43 das Zahnrad 44 segmentweise bewegt. Dabei läuft der Motor 42 vorzugsweise mit doppelter Drehzahl wie das Zahnrad 44, wobei die Steuerung über einen Schrittschaltwerkgeber 45 erfolgt.

## Patentansprüche

1. Schnellkochvorrichtung, bestehend aus einem Kochkessel (17) mit einer oberen und unteren Verschlußeinrichtung (26), (40), über die das Kochgut ein- bzw. ausgegeben werden kann und aus Frischwasserzufuhrleitungen (2) sowie Brauchwasserableitungen (3), wobei der vertikal angeordnete Kochkessel (17) von einer Vorheizkammer (13) umgeben ist, durch die das Frischwasser von unten nach oben durchgeleitet wird und wobei das vorgeheizte Frischwasser über einen oberhalb des Kochkessels angeordneten Verteilerkopf (4) sowohl in den Kochkessel (17) als auch zu einem Entlüftungs- und Entspannungsventil (16), (18) geführt wird,
dadurch gekennzeichnet,
daß das Entlüftungs- und Entspannungsventil (16), (18) Ventilausgänge aufweist, die mit einer wendelförmig um die Vorheizkammer (13) gewickelten Druckentspannungsspule (20) verbunden sind, wobei der im Kochkessel (17) vorhandene Druck bei gleichzeitiger kurzer Einspritzung von Kaltwasser durch das Einspritz- bzw. Reinigsventil (9) in den Kochkessel über die Druckentspannungsspule (20) in den Wärmetauscher (15) entspannt,
daß um das untere Ende des Kochkessels (17) eine Heizschlange (31) gewickelt ist und daß das Kochwasser nach indirektem Wärmetausch mit dem Frischwasser in die Brauchwasserableitung (3) einleitbar ist, wobei der obere Deckel (15a) des Wärmetauschers 15 als beheizte Standfläche für einen unterhalb des Kochkessels (17) bereitgestellten Teller (27) ausgebildet ist.

2. Schnellkochvorrichtung nach Anspruch 1,
dadurch gekennzeichnet,
daß die Dicke der Wandungen von Kochkessek (17), Vorheizkammer (13) und indirektem Wärmetauscher (15) 1 - 3 mm beträgt.

3. Schnellkochvorrichtung nach einem der vorhergehenden Ansprüche,
dadurch gekennzeichnet,
daß der indirekte Wärmetauscher (15) aus einem mit Kochwasser gefüllten Behälter besteht, durch den die Frischwasserzufuhrleitungen (2) geführt werden, bevor sie in die Vorheizkammer (13) einmünden.

4. Schnellkochvorrichtung nach einem der vorhergehenden Ansprüche,
dadurch gekennzeichnet,
daß die Verschlußeinrichtungen (26), (40) aus horizontal beweglichen Schiebern bestehen, die in keilförmig sich zuspitzenden Nuten (24a), (24b) bzw. (23a), (23b) dichtend gegenüber dem Kochkessel (17) geführt sind.

## Claims

1. A fast cooking device comprising a boiling vessel (17) having an upper and a lower locking facility (26), (40), through which the food to be cooked can be filled in or can be dispensed, respectively; further comprising freshwater feeding pipes (2) and used water draining pipes (3), wherein the vertically disposed boiling vessel (17) is surrounded by a pre-heating chamber (13) through which the freshwater is conducted from the bottom to the top, and wherein the preheated freshwater is conducted via a distribution head (4), being disposed above the boiling vessel, not only into the boiling vessel (17) but also to a bleeder and a relief valve (16), (18),
characterized in
that the bleeder and relief valves (16), (18) comprise valve outlets being connected to a pressure relief coil (20) which is wound helically around the pre-heating chamber (13), wherein the pressure existing in the boiling vessel (17) is relieved via the pressure relief coil (20) into the heat exchanger (15) when cold water is simultaneously injected into the boiling vessel via the injection or cleaning valve(9),
that a calorifier (31) is wound around the lower end of the boiling vessel (17) and that the cooking water may be discharged into the used water pipe (3) after indirect heat exchange with the freshwater, wherein the upper lid (15a) of the heat exchanger (15) is formed to be a heated base for the plate (27) held ready below the boiling vessel (17).

2. A fast cooking device according to Claim 1,
characterized in
that the thickness of the walls of the boiling vessel (17), the pre-heating chamber (13) and of the heat exchanger (15) is 1 to 3 mm.

3. A fast cooking device according to one of the preceding claims,
characterized in
that the indirect heat exchanger (15) comprises a cooking water containing receptacle through which the freshwater supply pipes (2) are lead before connected to the pre-heating chamber (13).

4. A fast cooking device according to one of the preceding claims,
characterized in
that the locking facilities (26), (40) comprise horizontally movable sliders being guided in wedge-like tapering grooves (24a), (24b) and (23a), (23b), respectively, whereby the boiling vessel (17) is sealed.

## Revendications

1. Dispositif de cuisson rapide, constitué par un récipient de cuisson (17) comportant un dispositif de fermeture supérieur (26) et un dispositif de fermeture inférieur (40), par l'intermédiaire desquels on peut introduire ou ressortir la matière à cuire, et des canalisations (2) d'amenée d'eau fraîche ainsi que des éléments (3) d'évacuation d'eau non potable, dans lequel le récipient de cuisson (17) disposé verticalement est entouré par une chambre de préchauffage (13), que l'eau fraîche traverse de bas en haut, et dans lequel l'eau fraîche préchauffée est guidée par l'intermédiaire d'une tête de distribution (4) disposée à la partie supérieure du récipient de cuisson, aussi bien dans le récipient de cuisson (17) qu'en direction d'une soupape de désaération (16) et d'une soupape de détente (18),
caractérisé en ce
que la soupape de désaération (16) et la soupape de détente (18) possèdent des sorties, qui sont raccordées à un serpentin de détente de pression (20), qui est enroulé sous forme hélicoïdale autour de la chambre de pression (13), auquel cas la pression présente dans le récipient de cuisson (17) est détendue moyennant une courte injection simultanée d'eau froide à travers la soupape d'injection et de nettoyage (9), dans le récipient de cuisson par l'intermédiaire du serpentin de détente de pression (20) dans l'échangeur de chaleur (15), et
qu'un serpentin de chauffage (31) est enroulé autour de l'extrémité inférieure du récipient de cuisson (17) et que l'eau de cuisson peut être introduite dans l'élément (3) d'évacuation de l'eau non potable après échange indirect de chaleur avec l'eau fraîche, le couvercle supérieur (15a) de l'échangeur de chaleur (15) étant agencé sous la forme d'une surface de support chauffée pour une assiette (27) disposée au-dessous du récipient de cuisson (17).

2. Dispositif de cuisson rapide selon la revendication 1, caractérisé en ce que l'épaisseur des parois du récipient de cuisson (17), de la chambre de préchauffage (13) et de l'échangeur de chaleur indirect (15) est égale à 1-3 mm.

3. Dispositif de cuisson rapide selon l'une des revendications précédentes, caractérisé en ce que l'échangeur de chaleur indirect (15) est constitué par un récipient rempli par l'eau de cuisson et que les canalisations (2) d'amenée d'eau fraîche traversent avant de déboucher dans la chambre de préchauffage (13).

4. Dispositif de cuisson rapide selon l'une des revendications précédentes, caractérisé en ce que les dispositifs de fermeture (26), (40) sont constitués par des tiroirs mobiles, qui sont guidés d'une manière étanche par rapport au récipient de cuisson (17), dans des rainures (24a, 24b) et (23a, 23b), qui se terminent en pointe avec une forme de coin.
